# EUROPÄISCHE PATENTSCHRIFT

(11) **EP 3 218 162 B1**
(45) Veröffentlichungstag und Bekanntmachung des Hinweises auf die Patenterteilung: **27.09.2023**
(21) Anmeldenummer: 15798325.5
(22) Anmeldetag: 09.11.2015
(51) Int. Cl.: B29C 48/691, B29C 48/25, B29C 48/27, B29C 48/694

(54) **FILTRIERVORRICHTUNG UND VERFAHREN ZUM FILTRIEREN EINES FLUIDS**
FILTERING APPARATUS AND METHOD FOR FILTERING A FLUID
DISPOSITIF ET PROCÉDÉ DE FILTRATION POUR LA FILTRATION D'UN FLUIDE

(30) Priorität: 11.11.2014 DE 102014016634
(43) Veröffentlichungstag der Anmeldung: 20.09.2017
(73) Patentinhaber: Maag Automatik GmbH, 63762 Großostheim (DE)
(72) Erfinder: POHL, Harald, 48477 Hörstel (DE)
(74) Vertreter: Puschmann Borchert Kaiser Klettner Patentanwälte Partnerschaft mbB
(86) Internationale Anmeldenummer: PCT/EP2015/002242
(87) Internationale Veröffentlichungsnummer: WO 2016/074780

(56) Entgegenhaltungen:
- WO-A1-2008/049559
- DE-B3-102012 006 563
- JP-A- S57 173 144

## Beschreibung

Die Erfindung betrifft eine Filtriervorrichtung gemäß der im Oberbegriff des Anspruches 1 angegebenen Art sowie ein Verfahren zum Betrieb einer Filtervorrichtung gemäß Anspruch 11.

Solche Filtriervorrichtungen zum Filtrieren eines Fluids werden in der Fachsprache allgemein üblicherweise als Siebwechsler bezeichnet. Mit solchen Filtriervorrichtungen werden zum Beispiel Fremdpartikel aus dem zu filtrierenden Fluid, beispielsweise aus aufgeschmolzenem Kunststoff in Form seiner polymeren Schmelze ausgefiltert. Entsprechende Verschmutzungen können beispielsweise bei aufgeschmolzenem Recyclingmaterial verstärkt auftreten. Im Rahmen der Filtrierung setzt sich selbstverständlich der entsprechende Filter bzw. der entsprechende Filtrierraum in dem Filterbolzen mit Rückständen früher oder später zu, so dass eine Reinigung oder sogar eine Auswechslung des Filters zur Regeneration des Filters erfolgen muss. Idealerweise können dazu zwei Filtersysteme parallel zueinander angeordnet sein, so dass es möglich ist, ein Filtersystem im Betrieb weiterlaufen zu lassen, während das andere einer Reinigung oder Auswechslung unterzogen wird. Eine Reinigung kann dabei beispielsweise durch sogenanntes Rückspülen mit bereits gefiltertem Fluid entgegen der üblichen Produktionsströmungsrichtung des Fluids erfolgen. Dazu sind Filtriervorrichtungen bekannt, welche in der Fachsprache als sogenannte Rückspülsiebwechsler bezeichnet werden.

Insbesondere beim Einsetzen solcher Filtriervorrichtungen in Anwendungen, welche hinsichtlich des Masseflusses des Fluids sehr kritisch sind, beispielsweise bei der Herstellung von Kunststofffolien mit geringen Dicken, ist es also wünschenswert, eine kontinuierliche Strömung von gefiltertem Fluid ohne besondere Schwankungen pro Zeiteinheit sicherstellen zu können, auch wenn ein Filter gereinigt oder ausgewechselt werden muss.

Aus der Druckschrift DE 10 2012 006 563 B3 der Anmelderin ist eine Vorrichtung zum Filtrieren eines Fluids bekannt, die zwei Filterbolzen mit einem oberen und einem unteren Filterbolzen aufweist, wobei die Filterbolzen wechselweise in eine Filterwechselstellung in Richtung von einer Aktuatorseite weg aus einer Stirnseite des Filtergehäuses herausgefahren und in eine Filtersiebwechselstellung verfahren werden können.

Das deutsche Patent DE 196 12 790 C2 der Anmelderin beschreibt eine Filtriervorrichtung zum Filtrieren eines Fluids, bei welcher zwei Filter in einem gemeinsamen Bolzen angeordnet sind, so dass je nach Stellung des Bolzens unterschiedliche Kavitäten in dem Bolzen in verschiedenen Teilströmen durchströmt werden können.

Die europäische Patentschrift EP 1 778 379 B1 beschreibt eine Filtriervorrichtung und ein Verfahren zum Filtrieren eines Fluids, insbesondere für kunststoffverarbeitende Anlagen, welche(s) ebenfalls einen konstanten Volumenstrom auch im Falle eines Rückspülens aufrechterhalten soll. Dabei kommt nach einem dortigen Filtrierraum in einem Schmelzekanal ein zusätzlicher Verdrängerbolzen zum Einsatz, welcher in geeigneter Position des Filtrierraums gereinigte Schmelze in entgegen der Produktionsrichtung zeigender Richtung im Rückspülverfahren durch den entsprechend positionierten Filter dort drücken kann. Auch dort kann durch die mehrteilige Ausführung und die Aufteilung der Funktion auf verschiedene Bolzen, welche den eigentlichen Filter tragen und den Verdrängerbolzen, eine im Wesentlichen kontinuierliche Schmelzeströmung auch im Fall einer Reinigung aufrechterhalten werden.

Die europäische Patentschrift EP 0 577 680 B1 beschreibt eine Filtriervorrichtung für zu reinigende Fluide, bei welcher innerhalb eines Filterkolbens, welcher den dortigen Filter trägt, ein weiterer Kolben angeordnet ist, welcher im Falle eines geforderten Rückspülens dort auch bereits gefiltertes Material in Gegenströmung durch den dortigen Filter drücken kann. Auch hier sind die Funktionen von filtertragendem Kolben und zusätzlichem Verdrängerkolben entsprechend konstruktiv getrennt aufgeteilt und ausgeführt.

Die Schrift WO 98/47688 beschreibt einen Filter für Viskosemassen, bei welchem ebenfalls bereits filtriertes Fluid dort durch einen zusätzlichen Verdrängerkolben in einem Schmelzekanal wieder in entsprechender Stellung durch den Filter in Rückspülstellung gedrückt werden kann, um den Filter dort entsprechend zu reinigen. Auch dabei ist eine funktionale Trennung von Siebträger und Verdrängerkolben konstruktiv vorgesehen.

Das Dokument WO 2008/049559 A1 beschreibt eine Vorrichtung zum gesteuerten Leiten einer Kunststoffschmelze mit einem drehbaren Bolzen.

Das Dokument JP S57-173144 beschreibt einen Siebtauscher mit einem drehbaren Bolzen.

Der vorliegenden Erfindung liegt somit die Aufgabe zugrunde, eine Filtriervorrichtung zum Filtrieren eines Fluids, insbesondere zum Filtrieren eines thermoplastischen polymeren Schmelzematerials, vorzusehen, bei welcher auf konstruktiv einfache Weise eine Filtersiebauswechslung möglich ist. Durch die erfindungsgemäße Filtriervorrichtung soll dazu mittels einer einfachen linearen Schubbewegung der Filterbolzen mit seinem Filtrierraum aus einer horizontalen Betriebsstellung in eine vertikale Filtersiebwechselstellung verfahrbar sein.

Diese erfindungsgemäße Aufgabe wird gelöst mit einer Filtriervorrichtung zum Filtrieren eines Fluids mit den Merkmalen gemäß dem Anspruch 1 und dem Anspruch 11. Weitere bevorzugte Ausführungsformen der Erfindung sind in den Unteransprüchen definiert.

Die erfindungsgemäße Filtriervorrichtung zum Filtrieren eines Fluids, insbesondere zum Filtrieren einer thermoplastischen polymeren Schmelze, umfasst eine Filterwechseleinrichtung, zumindest ein Filtergehäuse, und zumindest einen darin axial verschiebbaren Filterbolzen, der quer zu seiner Längsachse zumindest einen Filtrierraum mit zumindest einem Filtersieb aufweist. Der Filtrierraum ist während eines Filtrierbetriebs in einer Betriebsstellung horizontal ausgerichtet und steht mit zumindest einem Fluidzufuhrkanal und zumindest einem Fluidauslasskanal im Filtergehäuse in Fluidverbindung. Zum Auswechseln des Filtersiebs ist der Filterbolzen mit Filtrierraum in eine vertikale Filtersieb Wechselstellung außerhalb des Filtergehäuses verfahrbar. Die Filterwechseleinrichtung weist zumindest einen Aktuator auf, der eine Schubmechanik antreibt und den Filterbolzen mit dem Filtersieb in Längsrichtung des Filterbolzens, während einer Schubbewegung der Schubmechanik in die Filtersiebwechselstellung axial verschiebt und dabei von der horizontalen Ausrichtung der Betriebsstellung in die vertikale Filtersiebwechselstellung mittels einer Kulissenführung schwenkt.

Im Sinne der beschriebenen und beanspruchten erfindungsgemäßen Filtriervorrichtung sind die Begriffe der 'Stellungen' dabei also im Sinne von hinsichtlich der Filterbolzenposition variablen Stellungen zu verstehen, welche durchaus in sich eine Verlagerung des jeweiligen Bolzens mit umfassen und nicht auf statische 'Endpunkte' von entsprechenden Bewegungen beschränkt zu verstehen sind. Dies gilt insbesondere für die Betriebsstellung und die Filtersiebwechselstellung, welche ja in sich eine entsprechende erfindungsgemäße Filterbolzenverlagerung umfassen.

Ein Filterbolzen, der einen Filtrierraum quer zu seiner Längsachse aufweist und der üblicherweise quer zu seiner Längsachse von einem Schmelzestrom aus thermoplastischen Polymeren in horizontaler Richtung durchströmt wird, ist für einen Filtersiebwechsel eher ungünstig angeordnet. Der Gegenstand des Anspruchs 1 hat den Vorteil, dass er die Schwierigkeit, die mit dem Filterwechsel verbunden ist, dadurch überwindet, dass diese ungünstige horizontale Betriebsstellung durch einen einfachen linearen Vorschub in eine vorteilhafte vertikal ausgerichtete Filtersiebwechselstellung überführt werden kann, die stirnseitig außerhalb des Filtergehäuses liegen kann. Dazu ist der Filterbolzen in seiner Längsrichtung mindestens mit seinem Zylindermantel verlängert, so dass durch einen einfachen Schubmechanismus der Filterbolzen aus der Betriebsstellung in die Filtersiebwechselstellung verfahren werden kann, wobei aufgrund der Ausbildung einer Kulissenführung auf dem verlängerten Abschnitt des Filterbolzens die lineare Verschiebung bewirkt, dass gleichzeitig der Filterbolzen aus der horizontalen Betriebsstellung in die vertikale Filtersiebwechselstellung geschwenkt werden kann.

Somit ist das Filtersieb in dieser Filtersiebwechselstellung unter zu Hilfenahme eines Hubwerkzeugs, wie einen Hebekran an einer Laufkatze oder durch Hubfahrzeuge auswechselbar. Dabei kann sich bevorzugt die Filtersiebwechselstellung in Richtung der Stirnfläche des jeweiligen Filterbolzens befinden. Somit kann im Falle eines erforderlichen Siebwechsels dieser einfach in der Filtersiebwechselstellung erfolgen, ohne dass die gesamte Filtriervorrichtung komplett zerlegt werden muss. Insbesondere ist es nicht erforderlich, dass beim Siebwechsel der abdichtende entsprechend ausgebildete Filterbolzen komplett aus seiner Bohrung im Filtergehäuse entfernt werden muss. Dazu kann besonders bevorzugt der jeweilige Filterbolzen so lang und derart verfahrbar sein, dass in der Filtersiebwechselstellung der mindestens eine Fluidzufuhrkanal und der mindestens eine Fluidabfuhrkanal durch die Wandung des jeweiligen Filterbolzens vollständig verschlossen ist. In dieser Stellung ist es dann einfach, mit Hilf s Werkzeugen, wie oben erwähnt, den Filtersiebeinsatz aus dem Filtrierraum herauszuheben und gegen einen gereinigten Filtersiebeinsatz auszuwechseln.

Ein besonderer Vorteil liegt auch in der Kostenersparnis, da nur eine Antriebsrichtung, nämlich eine lineare Schubrichtung, erforderlich ist, um diesen Wechsel von der Betriebsstellung in die Filtersiebwechselstellung zu vollziehen. Durch die erfindungsgemäße entsprechende Nutzung einer Verlängerung der Mantelfläche des Filterbolzens als Kulissenführung und als Abdichtung entsprechender Öffnungen im Gehäuse ist auf konstruktiv besonders einfache Art und Weise eine Schmelzeführung in der erfindungsgemäßen Filtriervorrichtung möglich, ohne dass zusätzliche aufwendige Ventile oder Dichtanordnungen erforderlich sind.

Das Gehäuse der erfindungsgemäßen Filtriervorrichtung kann bevorzugt einteilig oder mehrteilig, beispielsweise zweiteilig, sein, wobei jeder Gehäuseteil jeweils eine der Bohrungen für den jeweils einen Fluidzufuhrkanal und den jeweils einen Fluidabfuhrkanal und jeweils einen der Filterbolzen mit jeweils einem Filtrierraum aufweist. Damit ist der Vorteil verbunden, dass die Filtriervorrichtung auch beim Wechsel der Filter ununterbrochen in Betrieb sein kann. Damit kann eine kontinuierliche Filtrierung der thermoplastischen polymeren Schmelze sichergestellt werden. In der beschriebenen Weise ist somit auf konstruktiv einfache Weise ein kontinuierlicher Produktionsbetrieb, ohne größere Masseschwankungen im Produktionsstrom der gefilterten Schmelze möglich, wobei gleichzeitig der entsprechende Filtersiebwechsel einzelner Filterelemente erfolgen kann.

Aus den obigen Druckschriften ist darüber hinaus bekannt, dass innerhalb des Gehäuses ein Rückspülkanal und ein Ablasskanal vorgesehen sein können, um eine Umkehr des Schmelzeflusses zum Reinigen des Filters innerhalb des Gehäuses zu erreichen, indem bereits gereinigte Schmelze dem Fluidabfuhrkanal zugeführt wird und in Richtung auf den Fluidzufuhrkanal die Ansammlungen von Verunreinigungen in einen Ablasskanal gespült werden.

Bevorzugt ist eine Ausführungsform der erfindungsgemäßen Filtriervorrichtung, bei der die Kulissenführung zumindest einen ortsfesten Kulissenführungsstift aufweist, der mit zumindest einer Kulissennut in Eingriff steht. Dazu ist die Kulissennut in eine Verlängerung des Zylindermantels des Filterbolzens eingearbeitet. Dabei bildet die Kulissennut helixförmig einen Winkel von 90° in der Verlängerung des Zylindermantels des Filterbolzens aus, so dass bei einer axialen Verschiebung des Filterbolzens der Filterbolzen gleichzeitig um 90° geschwenkt wird. Bei dieser bevorzugten Ausführungsform der Erfindung kann auf einen zusätzlichen Drehantrieb für den Filterbolzen vollständig verzichtet werden. Besonders bevorzugt können auch entsprechend gegenüberliegend angeordnet zwei Kulissenführungsstifte und zwei Kulissennuten vorgesehen sein, so dass die auftretenden Kräfte gleichmäßiger aufgenommen werden können.

Eine weitere Verbesserung liefert die Ausstattung des ortsfesten Kulissenführungsstiftes mit einem Wälzlager. Dabei kann das Wälzlager in der Kulissennut bei axialer Verschiebung des Filterbolzens unter Schwenken desselben unter vorteilhafter Verminderung von Gleitreibungsverlusten abrollen. Da ein Rollwiderstand eines Wälzlagers deutlich geringer ist als ein Gleitwiderstand des Kulissenführungsstiftes in der Kulissennut, wird der Wechsel von der Betriebsstellung in die Filtersiebwechselstellung deutlich erleichtert, so dass die Dimensionen der Schubmechanik verringert werden können.

Um die Schubkräfte für den linearen Schubmechanismus aufzubringen, ist es vorgesehen, dass die Schubmechanik einen Hydraulikzylinder aufweist. Ein Hydraulikzylinder kann relativ genau an den Bedarf an Verstellkraft bei einem linearen Vorschub angepasst werden.

Weiterhin ist es vorgesehen, dass das Filtersieb ein Kerzensieb aufweist, das kerzenförmige an den Filterbolzenquerschnitt angepasste Oberflächenvergrößerungen aufweist, wobei die kerzenförmigen Oberflächenvergrößerungen in der Betriebsstellung horizontal und in der Filtersiebwechselstellung vertikal ausgerichtet sind. Durch die kerzenförmige Ausbildung von Oberflächenvergrößerungen kann der Durchsatz durch das Filtersieb an thermoplastischer polymerer Schmelze deutlich erhöht werden.

Bevorzugt ist es, zwei oder mehr Filterbolzen für eine Filtriervorrichtung vorzusehen, die in einer besonders bevorzugten Ausführungsform vertikal übereinander in einem gemeinsamen Filtergehäuse angeordnet sind und die unabhängig voneinander zwischen der Betriebsstellung und der Filtersiebwechselstellung mittels unabhängiger Kulissenführung schwenkbar sind. Somit ist es in vorteilhafter Weise möglich, dass rechtzeitig vor einer drohenden Filterverstopfung eines der Filtersiebe ausgetauscht werden kann, während der Filterbetrieb weitergeführt wird. Als Messgröße kann der erforderliche Druckanstieg für einen vorbestimmten aufrechtzuerhaltenden Schmelzdurchfluss bei zunehmender Filterverunreinigung überwacht werden.

Gemäß einem weiteren Aspekt betrifft die Erfindung ein Verfahren zum Betrieb einer Filtriervorrichtung zum Filtrieren eines Fluids, insbesondere zum Filtrieren einer thermoplastischen polymeren Schmelze. Die Filtriervorrichtung ist mit einer Filterwechseleinrichtung und zumindest einem Filtergehäuse und zumindest einem darin axial verschieblichen Filterbolzen versehen, der quer zu seiner Längsachse zumindest einen Filtrierraum mit zumindest einem Filtersieb vorsieht. Der Filtrierraum ist während eines Filtrierbetriebs in einer Betriebsstellung horizontal ausgerichtet und steht mit zumindest einem Fluidzufuhrkanal und zumindest einem Fluidauslasskanal im Filtergehäuse in Fluidverbindung. Zum Auswechseln des Filtersiebs wird der Filterbolzen mit Filtrierraum in eine vertikale Filtersiebwechselstellung außerhalb des Filtergehäuses verfahren. Die Filterwechseleinrichtung weist dafür zumindest einen Aktuator auf, der eine Schubmechanik antreibt und den Filterbolzen mit dem Filtersieb in Längsrichtung des Filterbolzens, während einer Schubbewegung der Schubmechanik, in die Filtersiebwechselstellung axial verschiebt und der Filterbolzen aus der horizontalen Ausrichtung in die vertikale Filtersiebwechselstellung dreht. Die Drehung kann z.B. von Hand erfolgen.

Bevorzugt wird der Filterbolzen aus der horizontalen Ausrichtung in die vertikale Filtersiebwechselstellung mittels eines Drehantriebs gedreht.

Für eine derartige Drehung wird vorzugsweise ein programmierbarer Schrittmotor oder ein hydraulischer Drehantrieb, beispielsweise ein hydraulischer Drehzylinder, verwendet, der beispielsweise exakt eine 90°-Drehung des Filtrierbolzens aus der horizontalen Betriebsstellung in die vertikale Filtersiebwechselstellung vollziehen kann. Ein derartiger Schrittmotor oder hydraulischer Drehantrieb muss nicht ständig an dem Filterbolzen fixiert sein, sondern kann vielmehr über ein Kupplungselement an den Filterbolzen an- und auskoppelbar sein.

Die Erfindung wird im Folgenden rein beispielhaft und nicht auf die gezeigten Ausführungsformen beschränkend näher erläutert werden. In den Figuren zeigt:
- Fig. 1: einen schematischen Querschnitt durch eine Filtriervorrichtung mit zwei vertikal übereinander angeordneten Filterbolzen;
- Fig. 2: eine schematische perspektivische Ansicht eines Filtergehäuses der Filtriervorrichtung gemäß Figur 1;
- Fig. 3: eine schematische Seitenansicht der Filtriervorrichtung gemäß einer ersten Ausführungsform der Erfindung;
- Fig. 4: eine schematische perspektivische Ansicht einer Kulissennut einer Kulissenführung;
- Fig. 5: eine schematische perspektivische Ansicht eines Kulissenführungsstifts;
- Fig. 6: eine schematische perspektivische Ansicht eines Filtergehäuses mit Aktuator gemäß einer zweiten Ausführungsform der Erfindung; und
- Fig. 7: eine schematische Seitenansicht der Filtriervorrichtung gemäß der zweiten Ausführungsform der Erfindung.

In den Figuren sind gleiche Elemente mit gleichen Bezugszeichen bezeichnet, wobei in einigen Figuren die Bezugszeichen aus Gründen der Übersichtlichkeit weggelassen sind. Die einzelnen beschriebenen Elemente gemäß den bevorzugten Ausführungsformen der vorliegenden Erfindung sind untereinander - für den Fachmann - geläufig beliebig kombinierbar, wobei die gezeigten Ausführungsformen nicht beschränkend auf die jeweiligen Kombinationen bezogen sein sollen.

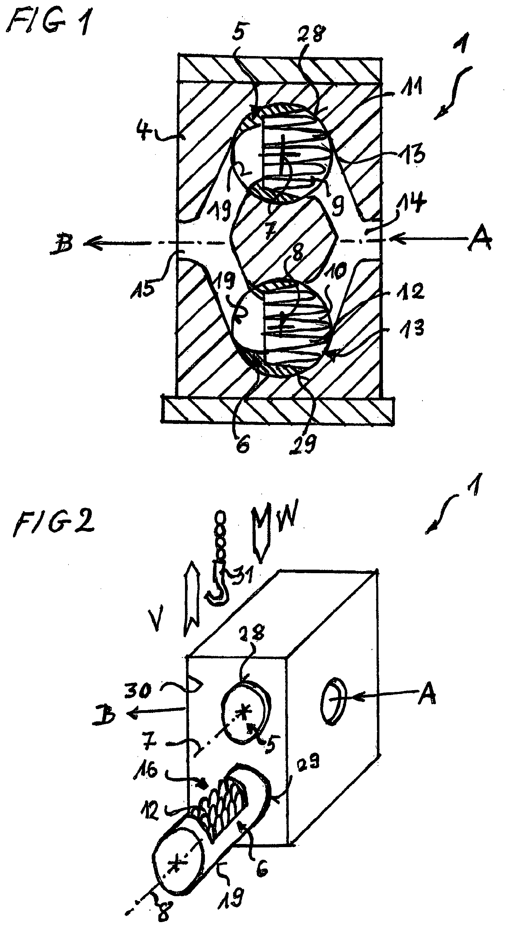

Figur 1 zeigt einen schematischen Querschnitt durch eine Filtriervorrichtung 1 mit zwei vertikal übereinander angeordneten Filterbolzen, nämlich einem oberen Filterbolzen 5 und einen unteren Filterbolzen 6, die axial verschieblich entlang ihren Achsen 7 bzw. 8 in einer entsprechenden oberen Bohrung 28 und einer unteren Bohrung 29 eines gemeinsamen Filtergehäuses 4 angeordnet sind. Quer zu den Achsen 7 und 8 weisen die Filterbolzen 5 und 6 einen entsprechenden oberen Filtrierraum 9 und einen unteren Filterraum 10 auf, in denen so genannte Kerzenfilter zur Vergrößerung des Durchsatzes eines entsprechenden oberen Filtersiebs 11 und eines unteren Filtersiebs 12 derart angeordnet sind, dass die kerzenförmigen Auswölbungen der Filtersiebe 11 und 12 in einer Betriebsstellung 13 horizontal ausgerichtet sind. Die zu filtrierende thermoplastische polymere Schmelze wird über einen Fluidzufuhrkanal 14 in Pfeilrichtung A horizontal in das Filtergehäuse 4 eingelassen und strömt in dieser Ausführungsform der Erfindung über einen Fluidauslasskanal 15 horizontal in Pfeilrichtung B aus dem Filtergehäuse 4 in gefiltertem Zustand aus. Der Fluideinlasskanal 14 als auch der Fluidauslasskanal 15 verzweigen sich in dem Filtergehäuse 4, so dass beide Filtrierräume 9 bzw. 10 in der in Figur 1 gezeigten Betriebsstellung 13 mit Fluid versorgt werden können. An Stelle der kerzenförmigen Ausgestaltung der Filtersiebe ist auch z.B. eine flächige und/oder bogenförmige Siebgestaltung denkbar.

In den in Figur 1 gezeigten Positionen der Filterbolzen 5 und 6 befinden sich beide Filterbolzen 5 und 6 sowie die zugehörigen Filtersiebe 11 und 12 in der Betriebsstellung 13, so dass sie quer zur Längsrichtung der Filterbolzen 5 und 6 angeordnet sind und horizontal von der thermoplastischen polymeren Schmelze durchströmt werden können. Die horizontale Ausrichtung der Filtrierräume 9 und 10 in der Betriebsstellung 13 ist jedoch eher ungünstig, um bei entsprechendem Bedarf mindestens eines der Filtersiebe 11 oder 12 auszuwechseln, zumal für eine seitliche Entnahme der Filtersiebe 11 und 12 keine geeigneten Hubwerkzeuge außerhalb des Filtergehäuses 1 zur Verfügung stehen.

Deshalb ist es bei der in Figur 2 gezeigten schematischen perspektivischen Ansicht des Filtergehäuses 4 der Filtriervorrichtung 1 mit Bezug auf Figur 1 gemäß der Erfindung vorgesehen, zum Auswechseln einzelner Filtersiebe zum Beispiel 12 den entsprechenden Filterbolzen 5 bzw. 6 nicht nur axial zu verschieben, so dass, wie Figur 2 zeigt, der untere Filterbolzen 6 aus dem Filtergehäuse 4 auf einer Stirnseite 30 des Filtergehäuses 4 herausragt, sondern zusätzlich den Filterbolzen 6 um 90° zu schwenken, so dass die Kerzen des unteren Filtersiebs 12 nun senkrecht ausgerichtet sind und das untere Filtersieb 12 mit einem Hubwerkzeug 31 aus dem entsprechenden Filtrierraum 10 in Pfeilrichtung V vertikal nach oben herausgehoben werden können und durch ein gereinigtes Filtersieb 12 in Pfeilrichtung W austauschbar ist.

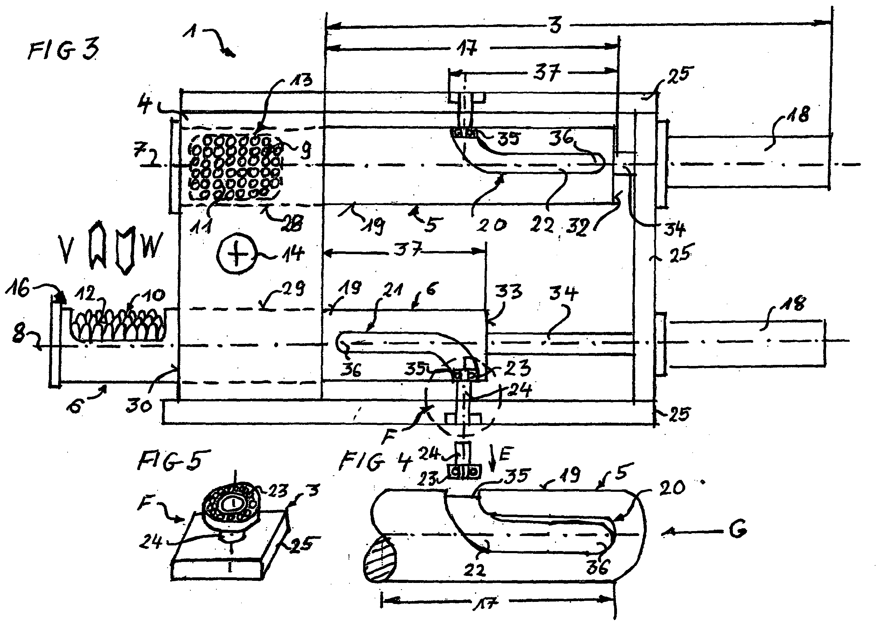

Figur 3 zeigt eine schematische Seitenansicht der Filtriervorrichtung 1 gemäß einer ersten Ausführungsform der Erfindung. Die Filtriervorrichtung 1 zeigt das Filtergehäuse 4 mit den beiden Bohrungen 28 und 29, in denen die Filterbolzen 5 und 6 gleitverschieblich und schmelzendicht geführt sind. An das Filtergehäuse 4 ist eine Filterwechseleinrichtung 3 angeflanscht, die entsprechende Verlängerungen der Filterbolzen 5 und 6 aufnimmt und zusätzlich Schubmechanismen 18, in diesem Beispiel in Form von Hydraulikzylindern, aufweist, welche das Verschieben der Filterbolzen 5 und 6 in den Filtergehäuse-Bohrungen 28 und 29 ermöglicht. Das jeweilige Ende 32 und 33 von Verlängerungsbereichen 37 der verlängerten Filterbolzen 5 und 6 ist mit entsprechenden Kolbenstangen 34 der Schubmechanik 18 gekoppelt, so dass die Filterbolzen 5 und 6 in den Bohrungen 28 und 29 derart verschoben werden können, dass mindestens eines der in Figur 1 gezeigten Filter schmelzdicht geschlossen werden kann. Somit kann in diesem in eine Filterwechselstellung 16 gebrachten Filtrierraum 10 die Verbindung zwischen dem in Figur 1 gezeigten Fluidzufuhrkanal 14 und dem Fluidauslasskanal 15 schmelzdicht unterbrochen werden.

Der Aktuator 17 weist für den oberen Filterbolzen 5 eine Kulissenführung 20 bzw. für den unteren Filterbolzen 6 eine untere Kulissenführung 21 auf, die dafür sorgen, dass mit dem Verschieben eines der Filterbolzen 5 oder 6, diese beim Wechseln von der Betriebsstellung 13, die hier für den oberen Filterbolzen 5 gezeigt ist, in die Filtersiebwechselstellung 16, die hier für den unteren Filterbolzen 6 gezeigt ist, der jeweilige Filterbolzen 6 aus der Betriebsstellung 13 um 90° in die Filterwechselstellung 16 geschwenkt wird. Dazu ist die untere Kulissenführung 21 derart ausgebildet, dass das untere Filtersieb 12 in vertikaler Richtung nicht nach unten, sondern nach oben geschwenkt wird, wie es die Figur 2 und 3 für den unteren Filterbolzen 6 zeigen. Die untere Kulissenführung 21 weist dazu zumindest eine in den Zylindermantel 19 der Verlängerung des unteren Filterbolzens 6 eingebrachte Kulissennut 22 auf. In dieser Kulissennut 22 kann, wie es Figur 5 als Vergrößerung des Ausschnittes F der Figur 3 zeigt, ein Wälzlager 23 abrollen, das mit seinem inneren Wälzlagerring auf zumindest einem Kulissenführungsstift 24, der ortsfest mit dem Gestell 25 der Filterwechseleinrichtung 3 verbunden ist, fixiert ist. Alternativ könnten zur noch gleichmäßigeren Aufnahme der beim Verdrehvorgang auftretenden Kräfte, auch entsprechend gegenüberliegend angeordnet zwei Kulissenführungsstifte und zwei Kulissennuten vorgesehen sein, was allerdings nicht explizit dargestellt ist. Die Kulissennut 22 ist in den Figuren beispielhaft mit im wesentlichen L-förmigem Verlauf dargestellt. Zur besseren Aufnahme der Kräfte im Bereich der Kulissennut 22 während des Schwenkvorgangs kann diese auch z.B. einen S-förmigen Verlauf aufweisen (nicht gezeigt).

Figur 4 zeigt dazu einen Aktuator 17 des Filterbolzens 5, der in Figur 3 in der Betriebsstellung 13 ist. Dabei ist der Kulissenführungsstift 24 mit dem Wälzlager 23 von einem Zusammenbau in Pfeilrichtung E für eine Ausgangsposition 35 der oberen Kulissenführung 20 zu sehen, so dass beim axialen Verschieben des Filterbolzens 5 in Pfeilrichtung G das Wälzlager 23 in der Kulissennut 22 des Zylindermantels 19 des Filterbolzens 5 von der in Figur 3 und 4 gezeigten Ausgangsposition 35 in eine um 90° geschwenkte und axial verschobenen Endposition 36 abrollen kann.

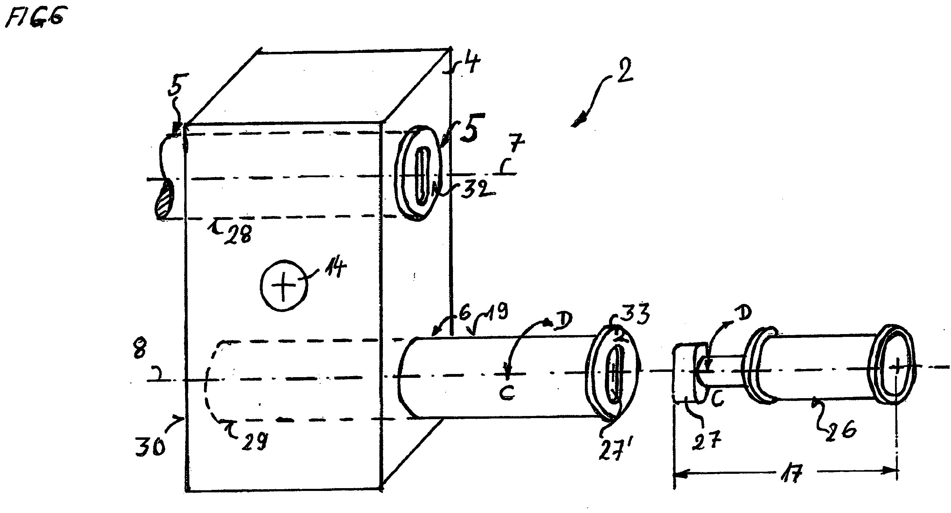

Figur 6 zeigt eine schematische perspektivische Ansicht eines Filtergehäuses 4 mit Aktuator 17 gemäß einer zweiten Ausführungsform der Erfindung. Der Aktuator 17 weist einen Drehantrieb 26, der ein Kupplungselement 27 antreibt, das in den Pfeilrichtungen C und D um jeweils 90° gedreht werden kann, auf. Das Kupplungselement 27 kann an eine Kupplungsaufnahme 27' eines Endes 33 einer Verlängerung des in Figur 6 gezeigten unteren Filterbolzens 6 gekoppelt werden. Wenn das Kupplungselement 27 mit der Kupplungsaufnahme 27' in Eingriff steht, kann der Filterbolzen 6 aus einer Betriebsstellung in eine Filtersiebwechselstellung gedreht werden und umgekehrt, aus einer Filtersiebwechselstellung zurück in eine Betriebsstellung gebracht werden. Dazu ist jedoch der in Figur 6 gezeigte Drehantrieb 26 zusätzlich zu einer Schubmechanik erforderlich, sofern nicht eine Drehung von Hand vorgenommen wird.

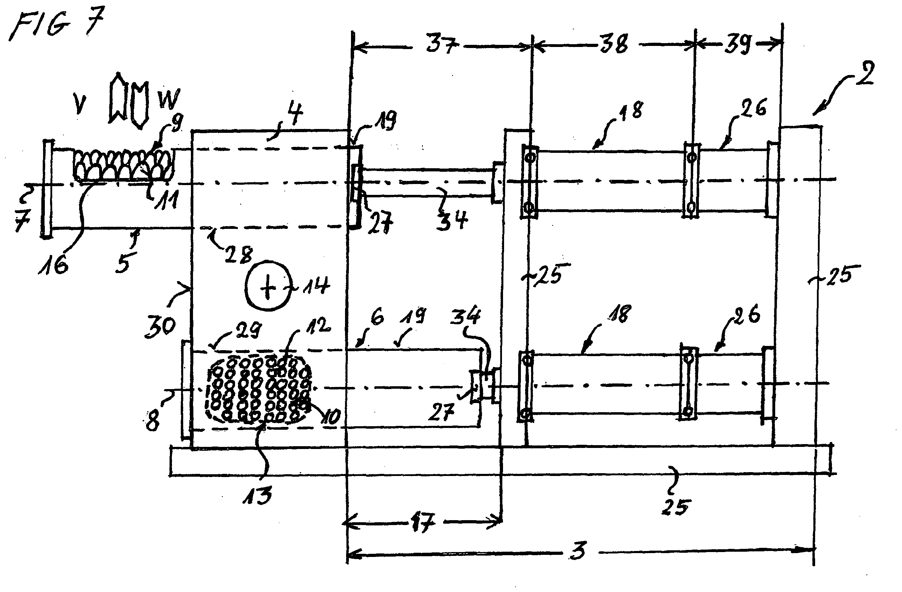

Figur 7 zeigt dazu eine schematische Seitenansicht der Filtriervorrichtung 2 gemäß der zweiten Ausführungsform der Erfindung. Die hier vorgesehene Filterwechseleinrichtung 3 weist drei Bereiche, einen Filterbolzen-Verlängerungsbereich 37, einen Schubbereich 38 und einen Drehbereich 39, auf, die an das Filtergehäuse 4 angeflanscht sind. Der Filterbolzen-Verlängerungsbereich 37 der Filterwechseleinrichtung 3 ermöglicht ein axiales Verschieben des jeweiligen Filterbolzens 5 bzw. 6, in diesem Fall des oberen Filterbolzens 5, aus der Betriebsstellung in die für den Filterbolzen 5 gezeigte Filtersiebwechselstellung 16.

An den Filterbolzen-Verlängerungsbereich 37 ist ein Schubbereich 38 angeflanscht, der in dieser Ausführungsform der Erfindung eine Schubmechanik 18 in Form eines Hydraulikzylinders aufweist, welcher drehbar gelagert ist. An den Schubbereich 38 schließt sich ein Drehbereich 39 an, der einen Drehantrieb 26 aufweist und beispielsweise mittels eines Schrittmotors oder eines hydraulischen Drehantriebs die Verdrehung aus der Betriebsstellung in die Filtersiebwechselstellung des Filterbolzens 5 ermöglicht. Dazu kann das in Figur 6 gezeigte Kupplungselement 27 einer Kolbenstange 34 eines drehbaren Hydraulikzylinders des Schubbereichs 38 in Eingriff stehen, wobei sicher gestellt werden muss, dass die Drehung des Hydraulikzylinder auf seine Kolbenstange 34 der Schubmechanik 18, was durch einen eckigen oder profilierten Querschnitt der Kolbenstange 34 möglich ist, übertragen wird.

Die obigen Ausführungsformen wurden zur Veranschaulichung möglicher Ausführungsformen beschrieben, wobei dem Fachmann verständlich ist, dass verschiedene Alternativen zu den hier beschriebenen Formen bei Ausführung der Ansprüche verwendet werden können, ohne den Bereich der Erfindung zu verlassen. Es wird erwartet und ist auch beabsichtigt, dass Weiterentwicklungen der hier erörterten Technik auftreten können, zumal die offenbarten Vorrichtungen beispielhaft und nicht begrenzend sind, so dass insgesamt der Schutzumfang nur durch den Gegenstand der anhängenden Ansprüche begrenzt wird.

### Bezugszeichenliste

- 1: Filtriervorrichtung
- 2: Filtriervorrichtung
- 3: Filterwechseleinrichtung
- 4: Filtergehäuse
- 5: Filterbolzen (oben)
- 6: Filterbolzen (unten)
- 7: Längsachse (oben)
- 8: Längsachse (unten)
- 9: Filtrierraum (oben)
- 10: Filtrierraum (unten)
- 11: Filtersieb (oben)
- 12: Filtersieb (unten)
- 13: Betriebsstellung
- 14: Fluidzufuhrkanal
- 15: Fluidauslasskanal
- 16: Filtersiebwechselstellung
- 17: Aktuator
- 18: Schubmechanik
- 19: Zylindermantel
- 20: Kulissenführung (oben)
- 21: Kulissenführung (unten)
- 22: Kulissennut
- 23: Wälzlager
- 24: Kulissenführungsstift
- 26: Drehantrieb
- 25: Gestell
- 27: Kupplungselement
- 27': Kupplungsaufnahme
- 28: Bohrung (oben)
- 29: Bohrung (unten)
- 30: Stirnseite
- 31: Hubwerkzeug
- 32: Ende des Filterbolzens (oben)
- 33: Ende des Filterbolzens (unten)
- 34: Kolbenstange
- 35: Ausgangsposition
- 36: Endposition
- 37: Filterbolzen-Verlängerungsbereich
- 38: Schubbereich
- 39: Drehbereich

- A: Pfeilrichtung
- B: Pfeilrichtung
- C: Pfeilrichtung
- D: Pfeilrichtung
- F: Ausschnitt
- V: Pfeilrichtung
- W: Pfeilrichtung

## Patentansprüche

1. Filtriervorrichtung für Kunststoffschmelzen mit einer Filterwechseleinrichtung (3), zumindest einem Filtergehäuse (4), zumindest einem darin axial verschiebbaren Filterbolzen (5, 6), der quer zu seiner Längsachse (7, 8) zumindest einen Filtrierraum (9, 10) mit zumindest einem Filtersieb (11, 12) aufweist, wobei der Filtrierraum (9, 10) während eines Filtrierbetriebs in einer Betriebsstellung (13) horizontal ausgerichtet ist und mit zumindest einem Fluidzufuhrkanal (14) und zumindest einem Fluidauslasskanal (15) im Filtergehäuse (4) in Fluidverbindung steht, wobei der Filtrierraum (9, 10) zum Auswechseln des Filtersiebs (11, 12) in eine Filtersiebwechselstellung (16) außerhalb des Filtergehäuses (4) verfahrbar ist, wobei die Filterwechseleinrichtung (3) zumindest einen Aktuator (17) aufweist, der eine Schubmechanik (18) antreibt und den Filterbolzen (5, 6) mit dem Filtersieb (11, 12) in Längsrichtung des Filterbolzens (5, 6), während einer Schubbewegung der Schubmechanik (18) in die Filtersiebwechselstellung (16) axial verschiebt, **dadurch gekennzeichnet, dass** eine Kulissenführung (20 vorgesehen ist, welche beim Verschieben in die Filterwechselstellung den Filterbolzen (5, 6) von der horizontalen Ausrichtung der Betriebsstellung (13) des Filtrierraums (9, 10) in die Filtersiebwechselstellung (16) schwenkt, in welcher der Filtrierraum (9, 10) vertikal ausrichtet ist.

2. Filtriervorrichtung nach Anspruch 1, **dadurch gekennzeichnet, dass** der Filterbolzen (5, 6) so lang und derart verfahrbar ist, dass in der Filtersiebwechselstellung (16) der mindestens eine Fluidzufuhrkanal (14) und der mindestens eine Fluidauslasskanal (15) durch den Zylindermantel (19) des Filterbolzens (5, 6) vollständig verschlossen ist.

3. Filtriervorrichtung nach Anspruch 1 oder Anspruch 2, **dadurch gekennzeichnet, dass** die Kulissenführung (20) zumindest einen ortsfesten Kulissenführungsstift (24) aufweist, der mit zumindest einer Kulissennut (22) in Eingriff steht.

4. Filtriervorrichtung nach Anspruch 3, **dadurch gekennzeichnet, dass** die Kulissennut (22) in eine Verlängerung des Zylindermantels (19) des Filterbolzens (5, 6) eingearbeitet ist.

5. Filtriervorrichtung nach Anspruch 3 oder Anspruch 4, **dadurch gekennzeichnet, dass** die Kulissennut (22) helixförmig einen Winkel von 90.° in der Verlängerung des Zylindermantels (19) des Filterbolzens (5, 6) beschreibt, so dass bei einer axialen Verschiebung des Filterbolzens (5, 6) der Filterbolzen (5, 6) gleichzeitig um 90° schwenkbar ist.

6. Filtriervorrichtung nach einem der Ansprüche 3 bis 5, **dadurch gekennzeichnet, dass** der ortsfeste Kulissenführungsstift ein Wälzlager aufweist, das in der Kulissennut bei axialer Verschiebung des Filterbolzens unter Schwenken desselben abrollbar ist.

7. Filtriervorrichtung nach einem der vorangehenden Ansprüche, **dadurch gekennzeichnet, dass** die Schubmechanik (18) einen Hydraulikzylinder aufweist.

8. Filtriervorrichtung nach einem der vorangehenden Ansprüche, **dadurch gekennzeichnet, dass** das Filtersieb (11, 12) ein Kerzensieb aufweist, das kerzenförmige an den Filterbolzenquerschnitt angepasste Oberflächenvergrößerungen aufweist, wobei die kerzenförmigen Oberflächenvergrößerungen in der Betriebsstellung (13) horizontal und in der Filtersiebwechselstellung (16) vertikal ausgerichtet sind.

9. Filtriervorrichtung nach Anspruch 5 oder 6, **dadurch gekennzeichnet, dass** die Filtriervorrichtung (1) zwei oder mehr Filterbolzen (5, 6) aufweist, die vertikal übereinander in einem gemeinsamen Filtergehäuse (4) angeordnet sind und die unabhängig voneinander zwischen der Betriebsstellung (13) und der Filtersiebwechselstellung (16) mittels unabhängiger Kulissenführungen (20, 21) schwenkbar sind.

10. Filtriervorrichtung nach einem der vorangehenden Ansprüche, **dadurch gekennzeichnet, dass** das Filtergehäuse (4) mehrteilig ist, bevorzugt zweiteilig ist, wobei jeder Gehäuseteil jeweils eine Bohrung (28, 29), jeweils einen Fluidzufuhrkanal (14) und einen Fluidauslasskanal (15) und jeweils einen der Filterbolzen (5, 6) mit jeweils einem Filtrierraum (9, 10), jeweils einem Rückspülkanal und jeweils einem Ablasskanal aufweist.

11. Verfahren zum Betrieb einer Filtriervorrichtung für Kunststoffschmelzen mit einer Filterwechseleinrichtung (2), zumindest einem Filtergehäuse (4), zumindest einem darin axial verschiebbaren Filterbolzen (5, 6), der quer zu seiner Längsachse (7, 8) zumindest einen Filtrierraum (9, 10) mit zumindest einem Filtersieb (11, 12) aufweist, wobei der Filtrierraum (9, 10) während eines Filtrierbetriebs in einer Betriebsstellung (13) horizontal ausgerichtet ist und mit zumindest einem Fluidzufuhrkanal (14) und zumindest einem Fluidauslasskanal (15) im Filtergehäuse (4) in Fluidverbindung steht, wobei der Filtrierraum (9, 10) zum Auswechseln des Filtersiebs (11, 12) in eine Filtersiebwechselstellung (16) außerhalb des Filtergehäuses (4) verfahren wird, wobei die Filterwechseleinrichtung (3) zumindest einen Aktuator (17) aufweist, der eine Schubmechanik (18) antreibt und den Filterbolzen (5, 6) mit dem Filtersieb (11, 12) in Längsrichtung des Filterbolzens (5, 6), während einer Schubbewegung in die Filtersiebwechselstellung (16) axial verschiebt, **dadurch gekennzeichnet, dass** der Filterbolzen (5, 6) mit dem Filtrierraum (9, 10) aus der horizontalen Ausrichtung des Filtrierraums (9, 10) in die vertikale des Filtrierraums in die Filtersiebwechselstellung (16) außerhalb des Filtergehäuses gedreht wird.

12. Verfahren nach Anspruch 11, **dadurch gekennzeichnet, dass** der Filterbolzen (5, 6) aus der horizontalen Ausrichtung in die vertikale Filtersiebwechselstellung (16) mittels eines Drehantriebs (26) gedreht wird.

13. Verfahren nach Anspruch 12, **dadurch gekennzeichnet, dass** der Drehantrieb (26) durch einen programmierbaren Schrittmotor betrieben wird.

14. Verfahren nach Anspruch 12, **dadurch gekennzeichnet, dass** der Drehantrieb (26) durch einen hydraulischen Drehantrieb betrieben wird.

15. Verfahren nach einem der Ansprüche 12 bis 14, **dadurch gekennzeichnet, dass** der Drehantrieb (26) über ein Kupplungselement (27) an den Filterbolzen (5, 6) angekoppelt wird.

## Claims

1. Filtering apparatus for plastic melts, having a filter change device (3), at least one filter housing (4), at least one filter bolt (5, 6) mounted so as to be axially displaceable therein, which filter bolt (5, 6) has at least one filter chamber (9, 10), which extends transverse to its longitudinal axis (7, 8), with at least one filter screen (11, 12), said filter chamber (9, 10) being aligned horizontally in an operating position (13) thereof during a filtering operation and being in fluid communication with at least one fluid feed channel (14) and at least one fluid discharge channel (15) in said filter housing (4), said filter chamber (9, 10) being adapted to be moved into a filter screen change position (16) outside said filter housing (4) for changing said filter screen (11, 12), said filter change device (3) having at least one actuator (17) which drives a thrust mechanism (18) and axially displaces said filter bolt (5, 6) with said filter screen (11, 12) in the longitudinal direction of said filter bolt (5, 6) during a thrust movement of said thrust mechanism (18) into said filter screen change position (16), **characterized in that** a slotted link guide (20) is provided which, during displacement into the filter change position, causes said filter bolt (5, 6) to pivot from the horizontal alignment of the filter chamber (9, 10) in its operating position (13) into said filter screen change position (16), in which position said filter chamber (9, 10) is then aligned vertically.

2. Filtering apparatus according to claim 1, **characterized in that** said filter bolt (5, 6) is of an appropriate length and adapted to be displaced in such a way that, in said filter screen change position (16), said at least one fluid feed channel (14) and said at least one fluid discharge channel (15) are completely closed by the cylinder jacket (19) of said filter bolt (5, 6).

3. Filtering apparatus according to claim 1 or claim 2, **characterized in that** said slotted link guide (20) comprises at least one stationary slotted link guide pin (24) which engages in at least one slotted link guide groove (22).

4. Filtering apparatus according to claim 3, **characterized in that** said slotted link guide groove (22) is incorporated in an extension of said cylinder jacket (19) of said filter bolt (5, 6).

5. Filtering apparatus according to claim 3 or claim 4, **characterized in that** said slotted link guide groove (22) extends helically at an angle of 90° in the extension of said cylinder jacket (19) of said filter bolt (5, 6), so that, when said filter bolt (5, 6) is being displaced axially, said filter bolt (5, 6) can simultaneously be pivoted by 90°.

6. Filtering apparatus according to any one of claims 3 to 5 above, **characterized in that** said stationary slotted link guide pin has a roller bearing which is adapted to roll in the slotted link guide groove as said filter bolt is being displaced axially and pivoted at the same time.

7. Filtering apparatus according to any one of the preceding claims, **characterized in that** said thrust mechanism (18) has a hydraulic cylinder.

8. Filtering apparatus according to any one of the preceding claims, **characterized in that** said filter screen (11, 12) has a candle filter screen which has candle-shaped surface enlargements adapted to the filter bolt cross section, which candle-shaped surface enlargements are aligned horizontally in the operating position (13) and are aligned vertically in the filter screen change position (16).

9. Filtering apparatus according to claim 5 or 6, **characterized in that** said filtering device (1) has two or more filter bolts (5, 6) which are arranged vertically one above the other in a common filter housing (4) and which can be pivoted independently of one another between the operating position (13) and the filter screen change position (16) by means of independent slotted link guides (20, 21).

10. Filtering apparatus according to any one of the preceding claims, **characterized in that** said filter housing (4) is of a multi-part, preferably a two-part, design, with each housing part having one bore (28, 29) each, one fluid supply channel (14) each and one fluid outlet channel (15) each, and one of said filter bolts (5, 6) each with one filter chamber (9, 10) each, one back-flush channel each and one outlet channel each.

11. Method for operating a filtering apparatus for plastic melts having a filter change device (3), at least one filter housing (4), at least one filter bolt (5, 6) mounted so as to be axially displaceable therein, which filter bolt (5, 6) has at least one filter chamber (9, 10), which extends transverse to its longitudinal axis (7, 8), with at least one filter screen (11, 12), said filter chamber (9, 10) being aligned horizontally in an operating position (13) thereof during a filtering operation and being in fluid communication with at least one fluid feed channel (14) and at least one fluid discharge channel (15) in said filter housing (4), said filter chamber (9, 10) being adapted to be moved into a filter screen change position (16) outside said filter housing (4) for changing said filter screen (11, 12), said filter change device (3) having at least one actuator (17) which drives a thrust mechanism (18) and axially displaces said filter bolt (5, 6) with said filter screen (11, 12) in the longitudinal direction of said filter bolt (5, 6) during a thrust movement of said thrust mechanism (18) into said filter screen change position (16), **characterized in that** said filter bolt (5, 6) is rotated, along with said filter chamber (9, 10), from the horizontal orientation of the filter chamber (9, 10) into the vertical orientation of the filter chamber into the filter screen change position (16) outside the filter housing.

12. Method according to claim 11, **characterized in that** said filter bolt (5, 6) is made to rotate from a horizontal orientation into a vertical filter screen change position (16) by means of a rotary drive (26).

13. Method according to claim 12, **characterized in that** said rotary drive (26) is operated by a programmable stepper motor.

14. Method according to claim 12, **characterized in that** said rotary drive (26) is operated by a hydraulic rotary drive.

15. Method according to any one of claims 12 to 14 above, **characterized in that** said rotary drive (26) is coupled to said filter bolt (5, 6) by means of a coupling element (27).

## Revendications

1. Dispositif de filtration pour des matières plastiques fondues comprenant un système de changement de filtre (3), au moins un boîtier de filtre (4), au moins un boulon de filtre (5, 6) pouvant coulisser axialement dans celui-ci, qui présente transversalement par rapport à son axe longitudinal (7, 8) au moins une chambre de filtration (9, 10) avec au moins un tamis de filtre (11, 12), dans lequel la chambre de filtration (9, 10) pendant un mode de filtration est orientée horizontalement dans une position de fonctionnement (13) et est en liaison fluidique avec au moins un canal d'amenée de fluide (14) et au moins un canal de sortie de fluide (15) dans le boîtier de filtre (4), dans lequel la chambre de filtration (9, 10) pour le changement du tamis de filtre (11, 12) est déplaçable dans une position de changement de filtre (16) à l'extérieur du boîtier de filtre (4), dans lequel le système de changement de filtre (3) présente au moins un actionneur (17), qui entraîne un mécanisme de poussée (18) et fait coulisser axialement le boulon de filtre (5, 6) avec le tamis de filtre (11, 12) dans la direction longitudinale du boulon de filtre (5, 6), pendant un mouvement de poussée du mécanisme de poussée (18) dans la position de changement de filtre (16), **caractérisé en ce qu'**un guide à coulisse (20) est prévu, lequel lors du coulissement dans la position de changement de filtre fait pivoter le boulon de filtre (5, 6) à partir de l'orientation horizontale de la position de fonctionnement (13) de la chambre de filtration (9, 10) dans la position de changement de filtre (16), dans laquelle la chambre de filtration (9, 10) est orientée verticalement.

2. Dispositif de filtration selon la revendication 1, **caractérisé en ce que** le boulon de filtre (5, 6) est long et déplaçable de telle sorte que dans la position de changement de filtre (16) le au moins un canal d'amenée de fluide (14) et le au moins un canal de sortie de fluide (15) est entièrement fermé par l'enveloppe cylindrique (19) du boulon de filtre (5, 6).

3. Dispositif de filtration selon la revendication 1 ou la revendication 2, **caractérisé en ce que** le guide à coulisse (20) présente au moins une tige de guide à coulisse (24) fixe, qui est en prise avec au moins une rainure de coulisse (22).

4. Dispositif de filtration selon la revendication 3, **caractérisé en ce que** la rainure de coulisse (22) est ménagée dans un prolongement de l'enveloppe cylindrique (19) du boulon de filtre (5, 6).

5. Dispositif de filtration selon la revendication 3 ou la revendication 4, **caractérisé en ce que** la rainure de coulisse (22) décrit de manière hélicoïdale un angle de 90° dans le prolongement de l'enveloppe cylindrique (19) du boulon de filtre (5, 6), de sorte que lors d'un coulissement axial du boulon de filtre (5, 6) le boulon de filtre (5, 6) peut pivoter simultanément de 90°.

6. Dispositif de filtration selon l'une quelconque des revendications 3 à 5, **caractérisé en ce que** la tige de guide à coulisse fixe présente un palier à roulement, qui roule dans la rainure de coulisse lors d'un coulissement axial du boulon de filtre sous l'effet d'un pivotement de celui-ci.

7. Dispositif de filtration selon l'une quelconque des revendications précédentes, **caractérisé en ce que** le mécanisme de poussée (18) présente un cylindre hydraulique.

8. Dispositif de filtration selon l'une quelconque des revendications précédentes, **caractérisé en ce que** le tamis de filtre (11, 12) présente un tamis formant bougie, qui présente des agrandissements de surface en forme de bougie adaptés à la section transversale de boulon de filtre, dans lequel les agrandissements de surface en forme de bougie sont orientés horizontalement dans la position de fonctionnement (13) et verticalement dans la position de changement de filtre (16).

9. Dispositif de filtration selon la revendication 5 ou 6, **caractérisé en ce que** le dispositif de filtration (1) présente deux boulons de filtre (5, 6) ou plus, qui sont disposés verticalement l'un au-dessus de l'autre dans un boîtier de filtre (4) commun et qui peuvent pivoter indépendamment l'un de l'autre entre la position de fonctionnement (13) et la position de changement de filtre (16) au moyen de guides à coulisse (20, 21) indépendants.

10. Dispositif de filtration selon l'une quelconque des revendications précédentes, **caractérisé en ce que** le boîtier de filtre (4) est en plusieurs parties, de préférence en deux parties, dans lequel chaque partie de boîtier présente respectivement un trou (28, 29), respectivement un canal d'amenée de fluide (14) et un canal de sortie de fluide (15) et respectivement un des boulons de filtre (5, 6) avec respectivement une chambre de filtration (9, 10), respectivement un canal de rétrolavage et respectivement un canal de décharge.

11. Procédé pour le fonctionnement d'un dispositif de filtration pour des matières plastiques fondues comprenant un système de changement de filtre (3), au moins un boîtier de filtre (4), au moins un boulon de filtre (5, 6) pouvant coulisser axialement dans celui-ci, qui présente transversalement par rapport à son axe longitudinal (7, 8) au moins une chambre de filtration (9, 10) avec au moins un tamis de filtre (11, 12), dans lequel la chambre de filtration (9, 10) pendant un mode de filtration est orientée horizontalement dans une position de fonctionnement (13) et est en liaison fluidique avec au moins un canal d'amenée de fluide (14) et au moins un canal de sortie de fluide (15) dans le boîtier de filtre (4), dans lequel la chambre de filtration (9, 10) pour le changement du tamis de filtre (11, 12) est déplacée dans une position de changement de filtre (16) à l'extérieur du boîtier de filtre (4), dans lequel le système de changement de filtre (3) présente au moins un actionneur (17), qui entraîne un mécanisme de poussée (18) et fait coulisser axialement le boulon de filtre (5, 6) avec le tamis de filtre (11, 12) dans la direction longitudinale du boulon de filtre (5, 6) pendant un mouvement de poussée dans la position de changement de filtre (16), **caractérisé en ce que** le boulon de filtre (5, 6) avec la chambre de filtration (9, 10) est amené en rotation à partir de l'orientation horizontale de la chambre de filtration (9, 10) dans la verticale de la chambre de filtration dans la position de changement de filtre (16) à l'extérieur du boîtier de filtre.

12. Procédé selon la revendication 11, **caractérisé en ce que** le boulon de filtre (5, 6) est amené en rotation à partir de l'orientation horizontale dans la position de changement de filtre (16) verticale au moyen d'un entraînement en rotation (26).

13. Procédé selon la revendication 12, **caractérisé en ce que** l'entraînement en rotation (26) fonctionne à l'aide d'un moteur pas à pas programmable.

14. Procédé selon la revendication 12, **caractérisé en ce que** l'entraînement en rotation (26) fonctionne à l'aide d'un entraînement en rotation hydraulique.

15. Procédé selon l'une quelconque des revendications 12 à 14, **caractérisé en ce que** l'entraînement en rotation (26) est accouplé au boulon de filtre (5, 6) par l'intermédiaire d'un élément d'accouplement (27).
